# EUROPÄISCHE PATENTSCHRIFT

(11) **EP 2 899 333 B1**
(45) Veröffentlichungstag und Bekanntmachung des Hinweises auf die Patenterteilung: **08.03.2017**
(21) Anmeldenummer: 15152612.6
(22) Anmeldetag: 27.01.2015
(51) Int. Cl.: E04H 4/08, C09D 5/00, A01C 3/02

(54) **Abdeckung für ein Wasserbecken**
Cover for water basin
Revêtement pour un bassin

(30) Priorität: 27.01.2014 AT 302014 U; 02.06.2014 AT 503842014
(43) Veröffentlichungstag der Anmeldung: 29.07.2015
(73) Patentinhaber: Armstark, Denise, 1050 Wien (AT)
(72) Erfinder: Armstark, Denise, 1050 Wien (AT); Armstark, Richard, Ing., 4780 Schärding (AT); Armstark, Christian, Ing., 4780 Schärding (AT); Helmig, Reinhard, 94160 Ringelai (DE)
(74) Vertreter: Jell, Friedrich

(56) Entgegenhaltungen:
- DE-U- 7 716 246
- US-A- 5 067 182

## Beschreibung

Die Erfindung betrifft eine Abdeckung für Wasserbecken, insbesondere für einen Whirlpool, mit mindestens einer mit einem wasserfesten, organisch löslichen Lack zumindest bereichsweise beschichteten Platte aus einem extrudierten Polystyrol-Hartschaum.

Um ein Wasserbecken vor Verschmutzung zu schützen, ist es aus dem Stand der Technik bekannt (DE7716246U1), über einem Wasserbecken eine Platte aus mehreren zusammenhängenden Plattenelementen vorzusehen, die aus einem extrudierten Polystyrol-Hartschaum bestehen. Diese Plattenelemente sind zudem vollflächig mit einem wasserfesten Lack auf Polyesterbasis beschichtet, um den extrudierten Polystyrol-Hartschaum gegenüber einer Wasser- oder Schmutzaufnahme zu schützen. Nachteilig bedarf es bei der Beschichtung mit Polyesterlack eines vergleichsweise aufwendigen Verfahrens, um Umweltauflagen sowie Personenschutz gewährleisten zu können. Zudem kann selbst in gehärteten Polyesterlacken ein Rest an organischen Lösungsmitteln nicht ausgeschlossen werden, sodass mit einer Ausgasung über einen längeren Zeitraum während der Nutzungsphase der Abdeckung gerechnet werden muss. Dies birgt jedoch nachteilig die Möglichkeit von nachteiligen Einflüssen auf das Wasserbecken bzw. auf dessen Kontaktfläche mit der Abdeckung, was den Anwendungsbereich derartiger Abdeckungen in erheblichem Ausmaß einschränkt.

Die Erfindung hat sich daher ausgehend vom eingangs geschilderten Stand der Technik die Aufgabe gestellt, eine Abdeckung zu schaffen, die sich trotz einfacher Herstellung - und damit geringer Herstellkosten - für einen breiten Anwendungsbereich eignen kann. Zudem soll diese Abdeckung den verdampfungsbedingten Wasserverlust des Wasserbeckens niedrig halten können.

Die Erfindung löst die gestellte Aufgabe dadurch, dass der Lack eine Acrylbasis aufweist und von einer gegenüber dem organischen Lösungsmittel des Lacks undurchlässigen Antihaftbeschichtung abgedeckt ist.

Weist der Lack eine Acrylbasis auf, kann damit zunächst eine vergleichsweise witterungsbeständige und gegenüber Wasserdampf äußerst diffusionsdichte Abdeckung ermöglicht werden, mit der unter anderem ein Wasserverlust eines damit abgedeckten Wasserbeckens in engen Grenzen gehalten werden kann. Außerdem ist ein Lack auf Acrylbasis vergleichsweise unkompliziert auf einer extrudierten Polystyrol-Hartschaum-Platte aufzubringen, womit wiederum die Herstellkosten niedrig gehalten werden können. Ist zudem der Lack von einer gegenüber dem organischen Lösungsmittel des Lacks undurchlässigen Antihaftbeschichtung abgedeckt, besteht selbst bei vergleichsweise hoher Wasserunlöslichkeit des Lacks keine Gefahr, dass organische Lösungsmittelreste im Lack eine chemische Kontaktreaktion, beispielsweise mit dem Rand des Wasserbeckens, hervorrufen können. Die erfindungsgemäße Abdeckung ist daher nicht nur äußerst diffusionsdicht und besonders kostengünstig herstellbar, sondern auch vielseitig anwendbar.

Eine hervorragende UV-Beständigkeit der Abdeckung kann gewährleistet werden, wenn der Lack ein Pigment, insbesondere TiO₂ und/oder C und/oder Eisen(II,III)-oxid, aufweist. Aufgrund der sehr guten Deckung kann sich in diesem Zusammenhang insbesondere Eisen(II,III)-oxid auszeichnen.

Vorstehend Genanntes kann seine technischen Effekte besonders entfalten, wenn der Lack mindestens 5 Gew.-% Pigment aufweist.

Dem Lack kann eine biozide Wirkung gegeben werden, indem dieser ein Antifoulingmittel als Additiv aufweist. Hierfür kann sich besonders nanopartikuläres SiO₂ auszeichnen, einem Algenbewuchs entgegenzuwirken. Zudem kann dies zur Verstärkung der Festigkeit der Lackmatrix beitragen.

Für vorstehende Wirkung hat sich als besonders vorteilhaft herausgestellt, wenn der Lack mindestens 7 Gew.-% nanopartikuläres SiO₂ aufweist.

Weist das Antihaftbeschichtung Polydimethylsiloxan auf, kann auf technologisch einfache Weise eine gegenüber den organischen Lösungsmittelresten des Lacks ausreichend undurchlässige Sperrschicht ausgebildet werden. Die Gefahr einer chemischen Kontaktreaktion mit dem Wasserbecken kann sich dadurch weiter vermindern. Zudem kann diese Gleitbeschichtung mechanische Beschädigungen am Wasserbecken bzw. an dessen Rand vermeiden - was insbesondere dann zur Geltung kommt, wenn die Abdeckung bewegt wird.

Vereinfachte Konstruktionsverhältnisse können sich ergeben, wenn die Platte mehrere formschlüssig miteinander verbundene Plattenelemente aus extrudiertem Polystyrol-Hartschaum aufweist. Insbesondere durch den Formschluss der Plattenelemente kann die Platte trotzdem äußerst diffusionsdicht gegenüber Wasserdampf sein - und den Wasserverlust des Wasserbeckens gering halten. Zudem kann damit eine adaptierbare Ausgestaltung der Platte entsprechend der abzudeckenden Größe des Wasserbeckens ermöglicht werden.

Als formschlüssige und diffusionsdichte Verbindung zwischen den Plattenelementen kann sich besonders eine formschlüssige Nut- und Federverbindung oder eine Verzahnung auszeichnen.

Ist die Platte zumindest auf der dem Wasserbecken zugewandten Plattenseite mit dem von der Antihaftbeschichtung abgedeckten Lack beschichtet, muss selbst im direkten Kontakt mit dem Wasser des Wasserbeckens mit keiner verminderten Standfestigkeit der Abdeckung gerechnet werden. Vorzugsweise ist die Platte vom von der Antihaftbeschichtung abgedeckten Lack vollflächig beschichtet, um eine chemische Reaktion innerhalb der Abdeckung sicher ausschließen zu können.

Eine erhöhte mechanische Steifigkeit der Abdeckung kann erreicht werden, wenn die Abdeckung einen Metallträger, insbesondere aus Edelstahl, aufweist, an dem die Platte befestigt ist. Insbesondere ein freies Durchhängen der Abdeckung ist dadurch vermeidbar.

Hinsichtlich des Metallträgers können einfache Konstruktionsverhältnisse erreicht werden, wenn dieser mehrere miteinander verbundene, insbesondere U-förmige, Profilelemente aufweist. Die mechanische Festigkeit kann weiter erhöht werden, wenn über den Stoß der Profilelemente die Platte verlaufend vorgesehen ist.

Besonders kann sich die erfindungsgemäße Abdeckung bei einer Vorrichtung auszeichnen, die ein Wasserbecken, insbesondere einen Whirlpool, aufweist, um dieses Wasserbecken vor Umwelteinflüssen zu schützen.

Ein besonders diffusionsdichter Abschluss des Wasserbeckens kann erreicht werden, wenn die zwischen einer geöffneten und geschlossenen Stellung bewegbare Abdeckung über eine Führung auf den Beckenrand des Wasserbeckens zur Ausbildung eines diffusionsdichten Abschlusses mit ihren beschichteten Platten absenkbar ausgebildet ist.

Eine erleichterte Handhabung bzw. daraus folgend die Vermeidung einer fehlerhaften Montage bei Abdeckung und/oder Wasserbecken können erreicht werden, wenn die Vorrichtung ein Montagegestell aufweist, welches das Wasserbecken trägt und längsseitig des Wasserbeckens mit Führungselementen der Führung der Abdeckung an das Wasserbecken anschließt.

In den Figuren ist der Erfindungsgegenstand beispielsweise anhand einer Ausführungsvariante dargestellt. Es zeigen
- Fig. 1: eine teilweise aufgerissene Seitenansicht auf ein Wasserbecken mit einer Abdeckung,
- Fig. 2: eine Schnittansicht nach II-II der Fig. 1,
- Fig. 3: eine vergrößerte Teilansicht der Fig. 1 und
- Fig. 4: eine vergrößerte Teilansicht der Fig. 2.

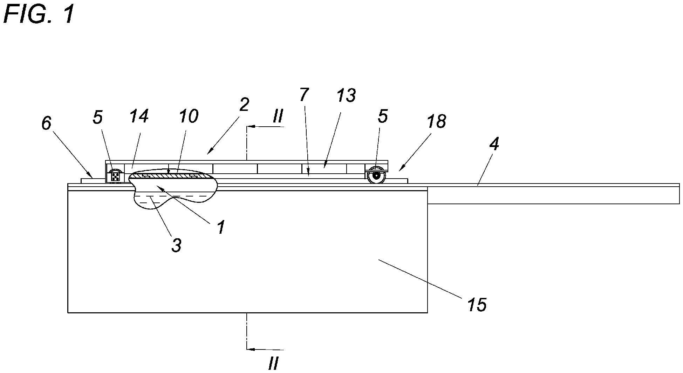

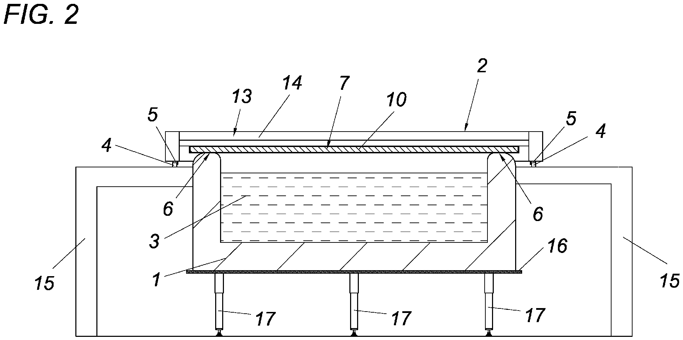

Das beispielsweise nach Fig. 1 dargestellte Wasserbecken 1, das bevorzugt als Whirlpool ausgeführt ist, kann durch eine Abdeckung 2 verschlossen werden, um das Wasserbecken 1 bzw. damit dessen Wasser 3 gegenüber Verdunstung, Wärmeverlust und Verschmutzung zu schützen. Die Abdeckung 2 ist zu diesem Zweck entlang von zwei parallel verlaufenden, schienenförmigen Führungselementen 4 auf seinen Laufrädern 5 linear horizontal verschiebbar. Zudem ist die Abdeckung 2 über nicht näher dargestellte Mittel vertikal verstellbar gelagert und damit senkrecht zum Wasserbecken 1 heb- und absenkbar. Letztere Lagerung, die beispielsweise über eine Höhenverstellung der Laufräder 5 realisiert werden kann, dient zum dichten Anschließen der Abdeckung 2 an den oberen Beckenrand 6 des Wasserbeckens 1, wie dies beispielsweise in der Fig. 2 zu erkennen ist.

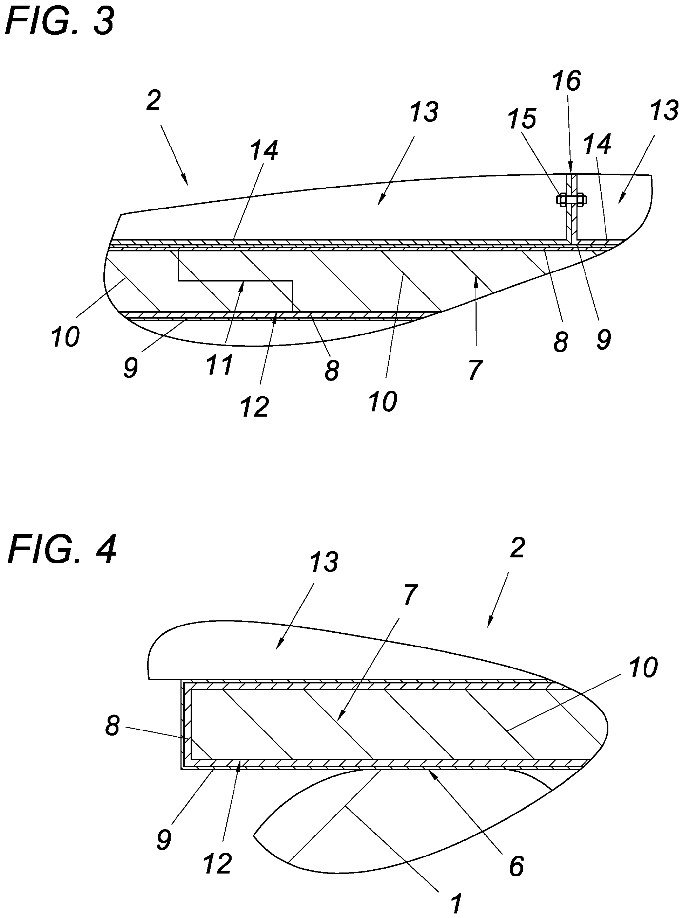

Zum Unterschied zu bekannten Abdeckungen mit einer Platte 7 aus extrudiertem Polystyrol-Hartschaum - lackiert mit wasserfestem, organisch löslichen Polyesterlack -, weist die erfindungsgemäße Platte 7 einen Lack 8 auf einer Acrylbasis auf, wie dies insbesondere den Figuren 3 und 4 zu entnehmen ist. Damit wird eine hervorragende Sperrschicht gegenüber einer Diffusion an Wasserdampf gebildet, was den Wasserverlust des damit abgedeckten bzw. verschlossenen Wasserbeckens 1 gering hält bzw. vermeidet. Zudem ist der Lack 8 der Abdeckung 2 mit einer gegenüber dem organischen Lösungsmittel des Lacks 8 undurchlässigen Antihaftbeschichtung 9 abgedeckt, um Reste an organischem Lösungsmittel im Lack 8 zurückzuhalten bzw. die Ausdampfung zu vermeiden. Eine chemische Reaktion von ausdampfenden Lösungsmittelresten mit dem Material bzw. mit der Beschichtung des Wasserbeckens 1 kann damit auf verlässliche Weise vermieden werden. Als Antihaftbeschichtung 9 eignet sich hierfür insbesondere Polydimethylsiloxan, wobei dies durch seine schmierende Eigenschaft auch dazu beiträgt, das Wasserbecken 1 vor Kratzern zu schützen.

Folgendes Verfahren zur Ausbildung des Schichtaufbaus der Abdeckung 2 hat sich als besonders geeignet herausgestellt: Eine extrudierte Polystyrol-Hartschaumplatte (eventuell verdichtet hergestellt) wird mit einem flüssigen Lack 8, nämlich Acryllack, mit organischem Lösungsmittel, mit 5 Gew.-% Eisen(II,III)-oxid, auch Eisenoxidschwarz genannt, als Pigment und mit 7 Gew.-% nanopartikulärem SiO₂ vollflächig durch ein Sprühverfahren beschichtet bzw. damit durch den Lack 8 abgedeckt. Nach Aushärtung des Acryllacks wird ein Antihaftmittel, das Polydimethylsiloxan in Emulsion aufweist, auf den Acryllack vollflächig aufgetragen und damit eine Antihaftbeschichtung 9 erzeugt. Diese Antihaftbeschichtung 9 bildet eine Sperrschicht gegenüber einem Ausgasen von Lösungsmittelresten des Lacks 8 aus.

Wie den Figuren 1 und 3 insbesondere entnommen werden kann, bilden mehrere untereinander verzahnte Polystyrol-Hartschaum-Plattenelemente 10 die Polystyrol-Hartschaum-Platte 7 aus. Durch die, in diesem Beispiel als Verzahnung 11 ausgeführte, formschlüssige Verbindung der Plattenelemente 10 kann eine Verformung besonders gut vermieden, sowie eine hohe Diffusionsdichte erreicht werden, um Wasserdampf im Wasserbecken 1 zurückzuhalten.

Im Allgemeinen wird erwähnt, dass es bereits ausreichen kann - was allerdings nicht näher dargestellt ist -, dass die Platte 7 nur auf der dem Wasserbecken 1 zugewandten Plattenseite 12 mit einem von der Antihaftbeschichtung 9 abgedeckten Lack 8 beschichtet ist.

Durch den Metallträger 13 wird auch die nach Fig. 1 dargestellte vergleichsweise lange Abdeckung 2 sicher gegenüber einem unerwünschten Durchbiegen stabilisiert. Dies entlastet wiederum auch die Platte 7, die am Metallträger 13 stoffschlüssig befestigt ist. Auch kann der Metallträger 13 formschlüssig in endseitige Aufnahmen der Platte 7 eingreifen, um die Verbindung zwischen diesen Teilen zu verstärken. Besonders hat sich ein Metallträger 13 aus Edelstahl ausgezeichnet - unter anderem, um den gegebenen chemischen Bedingungen aufgrund des Wassers 3 des Wasserbeckens 1 zu trotzen.

Modular - ähnlich zur Platte 7 mit ihren Plattenelementen 10 - wird auch der Metallträger 13 aus mehreren miteinander verbundenen Profilelementen 14 gebildet. Hierzu sind die Profilelemente 14 an ihren Stegen durch Verbindungsmittel, nämlich Schraubverbindungen 15, fest miteinander verbunden. Die Platte 7 bzw. deren Plattenelemente 10 verlaufen über die Stöße 16 der Profilelemente 14, was die Steifigkeit der Abdeckung 2 weiter erhöht.

Das Wasserbecken 1 ist, wie in Fig. 1 und 2 zu erkennen, in einem Montagegestell 15 vorgesehen, auf dessen Grundplatte 16 das Wasserbecken 1 ruht. Über höhenverstellbare Stützen 17 ist diese Grundplatte 16 ausrichtbar. Das Montagegestell 15 schließt mit den schienenförmigen Führungselementen 4 längsseitig des Wasserbeckens 1 an das Wasserbecken 1 an.

Die über die Führungselemente 4 am Montagegestell 15 gelagerte Abdeckung 2 kann daher stets ausgerichtet bleiben - dadurch können selbst eventuelle Fehler im Zuge der Aufstellung der Vorrichtung kompensiert werden. Dies gewährleistet nicht nur eine sichere und einfache Montage der Vorrichtung, sondern auch stets einen diffusionsdichten Abschluss des Wasserbeckens 1. Letztes, indem die zwischen geöffneter und geschlosser Stellung bewegbare Abdeckung 2 über die Führung 18 auf den Beckenrand 6 des Wasserbeckens 1 zur Ausbildung des diffusionsdichten Abschlusses mit ihren beschichteten Platte 7 absenkbar ausgebildet ist.

## Patentansprüche

1. Abdeckung für ein Wasserbecken (1), insbesondere für einen Whirlpool, mit mindestens einer mit einem wasserfesten, organisch löslichen Lack (8) zumindest bereichsweise beschichteten Platte (7) aus einem extrudierten Polystyrol-Hartschaum, **dadurch gekennzeichnet, dass** der Lack (8) eine Acrylbasis aufweist und von einer gegenüber dem organischen Lösungsmittel des Lacks (8) undurchlässigen Antihaftbeschichtung (9) abgedeckt ist.

2. Abdeckung nach Anspruch 1, **dadurch gekennzeichnet, dass** der Lack (8) ein Pigment, insbesondere TiO₂ und/oder C und/oder Eisen(II,III)-oxid, aufweist.

3. Abdeckung nach Anspruch 2, **dadurch gekennzeichnet, dass** der Lack (8) mindestens 5 Gew.-% Pigment aufweist.

4. Abdeckung nach Anspruch 1, 2 oder 3, **dadurch gekennzeichnet, dass** der Lack (8) ein Antifoulingmittel, insbesondere nanopartikuläres SiO₂, als Additiv aufweist.

5. Abdeckung nach Anspruch 4, **dadurch gekennzeichnet, dass** der Lack (8) mindestens 7 Gew.-% nanopartikuläres SiO₂ aufweist.

6. Abdeckung nach einem der Ansprüche 1 bis 5, **dadurch gekennzeichnet, dass** die Antihaftbeschichtung (9) Polydimethylsiloxan aufweist.

7. Abdeckung nach einem der Ansprüche 1 bis 6, **dadurch gekennzeichnet, dass** die Platte (7) mehrere formschlüssig miteinander verbundene Plattenelemente (10) aus extrudiertem Polystyrol-Hartschaum aufweist.

8. Abdeckung nach Anspruch 7, **dadurch gekennzeichnet, dass** zwischen den Plattenelementen (10) eine Verzahnung (11) oder eine formschlüssige Nut- und Federverbindung vorgesehen ist.

9. Abdeckung nach einem der Ansprüche 1 bis 8, **dadurch gekennzeichnet, dass** die Platte (7) zumindest auf der dem Wasserbecken (1) zugewandten Plattenseite mit dem von der Antihaftbeschichtung (9) abgedeckten Lack (8), insbesondere vollflächig, beschichtet ist.

10. Abdeckung nach einem der Ansprüche 1 bis 9, **dadurch gekennzeichnet, dass** die Abdeckung (2) einen Metallträger (13), insbesondere aus Edelstahl, aufweist, an dem die Platte (7) befestigt ist.

11. Abdeckung nach einem der Ansprüche 1 bis 10, **dadurch gekennzeichnet, dass** der Metallträger (13) mehrere miteinander verbundene, insbesondere U-förmige, Profilelemente (14) aufweist, über deren Stoß (16) die Platte (7) verlaufend vorgesehen ist.

12. Vorrichtung mit einem Wasserbecken (1), insbesondere Whirlpool, und mit einer Abdeckung (2) nach einem der Ansprüche 1 bis 11.

13. Vorrichtung nach Anspruch 12, **dadurch gekennzeichnet, dass** die zwischen einer geöffneten und geschlossenen Stellung bewegbare Abdeckung (2) über eine Führung (18) auf den Beckenrand (6) des Wasserbeckens (1) zur Ausbildung eines diffusionsdichten Abschlusses mit ihren beschichteten Platten (7) absenkbar ausgebildet ist.

14. Vorrichtung mit Anspruch 12 oder 13, **dadurch gekennzeichnet, dass** die Vorrichtung ein Montagegestell (15) aufweist, das das Wasserbecken (1) trägt und längsseitig des Wasserbeckens (1) mit Führungselementen (4) der Führung (18) der Abdeckung (2) an das Wasserbecken (1) anschließt.

## Claims

1. A cover for a water pool (1), more particularly for a whirlpool, comprising at least one panel (7) made from an extruded rigid polystyrene foam and coated at least in a section by a water-proof, organosoluble lacquer (8), **characterized in that** the lacquer (8) has an acrylic base and is covered by a non-stick coating (9) which is impermeable to the organic solvent of the lacquer (8).

2. A cover according to claim 1, **characterized in that** the lacquer (8) comprises a pigment, more particularly TiO₂ and/or C and/or iron (II, III) oxide.

3. A cover according to claim 2, **characterized in that** the lacquer (8) has at least 5% by weight of pigment.

4. A cover according to claim 1, 2 or 3, **characterized in that** the lacquer (8) comprises an antifouling agent, more particularly nanoparticulate SiO₂, as an additive.

5. A cover according to claim 4, **characterized in that** the lacquer (8) has at least 7% by weight of nanoparticulate SiO₂.

6. A cover according to one of the claims 1 to 5, **characterized in that** the non-stick coating (9) comprises polydimethyl siloxane.

7. A cover according to one of the claims 1 to 6, **characterized in that** the panel (7) comprises several panel elements (10) which are made of extruded rigid polystyrene foam and are connected to each other in an interlocking manner.

8. A cover according to claim 7, **characterized in that** a toothing (11) or an interlocking tongue-and-groove connection is provided between the panel elements (10).

9. A cover according to one of the claims 1 to 8, **characterized in that** the panel (7), at least on the panel side facing the water pool (1), is coated by the lacquer (8) covered by the non-stick coating (9), more particularly over the entire surface.

10. A cover according to one of the claims 1 to 9, **characterized in that** the cover (2) comprises a metal support (13), more particularly made of stainless steel, to which the panel (7) is fixed.

11. A cover according to one of the claims 1 to 10, **characterized in that** the metal support (13) comprises several mutually connected, more particularly U-shaped profile elements (14), via the butt joint (16) of which the panel (7) is provided in an extending fashion.

12. An apparatus comprising a water pool (1), more particularly a whirlpool, and comprising a cover (2) according to one of the claims 1 to 11.

13. An apparatus according to claim 12, **characterized in that** the cover (2), which is movable between an open and closed position, is formed to be lowerable via a guide (18) onto the pool edge (6) of the water pool (1) for forming a diffusion-tight closure with its coated panels (7).

14. An apparatus with claim 12 or 13, **characterized in that** the apparatus comprises
a mounting frame (15) which carries the water pool (1) and adjoins the water pool (1) on the longitudinal side of the water pool (1) with guide elements (4) of the guide (18) of the cover (2).

## Revendications

1. Couverture pour un bassin d'eau (1), en particulier pour un bain à remous, avec une plaque (7) en mousse dure de polystyrène extrudée recouverte au moins par zones d'un vernis (8) résistant à l'eau et soluble dans les solvants organiques, **caractérisée en ce que** le vernis (8) est à base d'acrylique et est recouvert d'un revêtement antiadhésif (9) imperméable au solvant organique du vernis (8).

2. Couverture selon la revendication 1, **caractérisée en ce que** le vernis (8) contient un pigment, en particulier du TiO₂ et/ou du carbone et/ou de l'oxyde de fer (II, III).

3. Couverture selon la revendication 2, **caractérisée en ce que** le vernis (8) contient au moins 5 % de pigment.

4. Couverture selon la revendication 1, 2 ou 3, **caractérisée en ce que** le vernis (8) contient un additif antimoisissures, en particulier des nanoparticules de SiO₂.

5. Couverture selon la revendication 4, **caractérisée en ce que** le vernis (8) contient au moins 7 % en poids de nanoparticules de SiO₂.

6. Couverture selon l'une des revendications 1 à 5, **caractérisée en ce que** le revêtement antiadhésif (9) contient de la polydiméthylsiloxane.

7. Couverture selon l'une des revendications 1 à 6, **caractérisée en ce que** la plaque (7) comprend plusieurs éléments de plaque (10) en mousse dure de polystyrène extrudée assemblés par engagement positif.

8. Couverture selon la revendication 7, **caractérisée en ce qu'**il est prévu entre les éléments de plaque (10) une denture (11) ou un assemblage par rainure et languette en correspondance de forme.

9. Couverture selon l'une des revendications 1 à 8, **caractérisée en ce que** la plaque (7) est revêtue du vernis (8) recouvert par le revêtement antiadhésif (9) au moins sur sa face tournée vers le bassin d'eau (1), de préférence sur toute la surface.

10. Couverture selon l'une des revendications 1 à 9, **caractérisée en ce que** la couverture (2) présente un support métallique (13), en particulier en acier inoxydable, sur lequel la plaque (7) est fixée.

11. Couverture selon l'une des revendications 1 à 10, **caractérisée en ce que** le support métallique (13) comprend plusieurs éléments profilés (14) en forme de U réunis entre eux, sur le joint (16) desquels la plaque (7) est posée.

12. Dispositif avec un bassin d'eau (1), en particulier un bain à remous, et avec une couverture (2) selon l'une des revendications 1 à 11.

13. Dispositif selon la revendication 12, **caractérisé en ce que** la couverture (2) mobile entre une position ouverte et une position fermée est conçue pour pouvoir être abaissée sur un guide (18) sur le rebord (6) du bassin d'eau (1) afin de former une fermeture étanche à la diffusion avec ses plaques (7) revêtues.

14. Dispositif selon la revendication 12 ou 13, **caractérisé en ce qu'**il comporte un châssis de montage (15) qui porte le bassin d'eau (1) et se raccorde au bassin d'eau (1) avec des éléments de guidage (4) du guidage (18) de la couverture (2) sur la longueur du bassin d'eau (1).
